# EUROPÄISCHE PATENTSCHRIFT

(11) **EP 1 336 016 B1**
(45) Veröffentlichungstag und Bekanntmachung des Hinweises auf die Patenterteilung: **04.08.2004**
(21) Anmeldenummer: 01274082.5
(22) Anmeldetag: 04.12.2001
(51) Int. Cl.: E04F 15/00, E04F 15/04, C09K 3/10

(54) **FEUCHTIGKEITSSCHUTZMITTEL FÜR PANEELE**
DAMP PROTECTANT FOR PANELS
PRODUIT DE PROTECTION CONTRE L'HUMIDITE POUR PANNEAUX

(43) Veröffentlichungstag der Anmeldung: 20.08.2003
(73) Patentinhaber: Kronospan Technical Co. Ltd., 2404 Engomi, Nicosia (CY)
(72) Erfinder: DÖHRING, Dieter Dr., 01561 Lampertswalde (DE)
(74) Vertreter: Gille Hrabal Struck Neidlein Prop Roos
(86) Internationale Anmeldenummer: PCT/EP2001/014130
(87) Internationale Veröffentlichungsnummer: WO 2003/048481

(56) Entgegenhaltungen:
- EP-A- 0 855 482
- EP-A- 1 020 504
- DE-A- 3 025 217
- DE-A- 4 138 561
- DE-U- 20 109 840
- GB-A- 2 243 381
- US-A- 5 448 865
- US-A- 5 502 939

## Beschreibung

Die Erfindung betrifft eine Verwendungsweise eines Feuchtigkeitsschutzmittels, um Paneele vor Feuchtigkeit zu schützen, sowie mit dem Feuchtigkeitsschutzmittel versehene Paneele.

Ein Paneel, zum Beispiel bekannt aus den Druckschriften EP 090 6994 A1, **EP 0 855 482 A2 sowie DE 201 09 840 U1** ist eine längliche, dünne Platte, die seitlich, also an den Längs- und Querseiten zum Beispiel über Nuten und Federn mit weiteren Paneelen verbunden werden kann. So miteinander verbundene Paneele werden insbesondere als Fußbodenbelag oder als Wandverkleidung eingesetzt. Die Fuge, die dann durch die beiden Paneele gebildet wird, wird nachfolgend Verbindungsfuge genannt.

Ein Laminatpaneel wird gemäß dem Stand der Technik Pressverfahren wie folgt hergestellt. Eine aus einem Holzwerkstoff wie HDF, MDF bestehende Trägerplatte wird bereitgestellt. Auf eine mit Harz getränkte folienartige Schicht, welche "Gegenzugpapier" genannt wird, wird die Trägerplatte gelegt. Hierauf wird eine weitere mit Harz getränkte, folienartige, mit einem Dekor versehene Schicht gelegt. Eine solche Schicht ist unter der Bezeichnung "Dekorpapier" bekannt. Eine nächste korund- sowie harzhaltige folienartige Schicht wird in einer Ausführungsform auf die Dekorschicht gebracht. Hierdurch wird die gewünschte Härte der Oberfläche eines Paneels erzielt, wenn dieses als Fußboden verwendet werden soll.

Das vorgenannte Schichtsystem wird in eine Presse transportiert. Bei typischerweise 200 °C wird das Schichtsystem unter Druck verpresst. Dabei werden die einzelnen Schichten miteinander verbunden.

Aus diesem Schichtsystem werden mit entsprechenden Vorrichtungen Paneele zugeschnitten, die üblicherweise circa 1200 bis 1300 mm lang, fünf bis zwölf Millimeter dick und circa 200 mm breit sind. Abschließend werden Nuten und Federn gefräst. Über Nut und Feder werden Paneele miteinander verleimt. Verwendet werden insbesondere sogenannte Weißleime auf Basis wässriger PVAc- Dispersionen.

Die verbundenen Paneele werden beispielsweise zu einem Fußbodenbelag zusammengesetzt, der unter der Bezeichnung Laminatfußboden bekannt ist. Derartige Fußböden sind durch die Verleimung recht gut gegen Eindringen von Wasser in die Verbindungsfugen von der Oberfläche her geschützt.

Um eine Verleimung vermeiden zu können, sind,aus den Druckschriften WO 96/27721, **EP 0 855 482 A2, DE 201 09 840 U1** oder DE 298 237 49 U1 Kupplungselemente für ein Paneel bekannt, welche zunächst in bekannter Weise Nut und Feder umfassen. Darüber hinaus weist jede Feder auf einer Ober und/oder Unterseite zumindest ein zusätzliches vorstehendes Verriegelungselement auf. Eine korrespondierende Nut ist mit wenigstens einer Rille so versehen, dass das vorstehende Verriegelungselement nach dem Zusammenfügen zweier Paneele in die korrespondierende Rille gelangt. Es entsteht so eine formschlüssige Verbindung zwischen zwei Paneelen. Zwei Paneele sind dann senkrecht zur Fußbodenebene aufgrund der Nut und Feder verbunden. Aufgrund der Rille und dem vorstehenden Verriegelungselement sind sie außerdem parallel zur Fußbodenebene sowie zugleich senkrecht zur Verbindungsfuge miteinander formschlüssig verbunden. Die Verwendung von Leim ist nicht erforderlich, um Paneele zu einem Fußboden oder einer Wandverkleidung zusammenzusetzen. Die Paneele sind also mechanisch miteinander verriegelt.

Infolge einer erheblichen Vereinfachung des Verlegens haben sich am Markt die mechanisch verriegelbaren Systeme durchgesetzt, d.h. die Festigkeit der Einzelpaneele untereinander wird ohne Verwendung von Leim erreicht. Bei derartigen Systemen besteht nachteilhaft immer die Gefahr, dass Wasser von der Oberfläche im Fugenbereich, also in die Verbindungsfuge eintritt und zu einem Anquellen der Trägerplatte führt. Dieses Anquellen kann zu einer Zerstörung des verlegten Bodens in diesem Bereich führen. Wasser bzw. Feuchtigkeit kann jederzeit unkontrolliert auf den Boden gelangen, z.B. durch zu nasses Wischen oder einen umstürzenden Eimer.

Um dem entgegenzuwirken, wurden von den Herstellern verschiedene Anstrengungen unternommen. So werden u.a. Trägerplatten verwendet, die durch spezielle Herstellung und zwar insbesondere durch den Einsatz von Melaminharzen ein geringeres Quellpotential haben. Nachteil ist, dass diese Platten sehr teuer sind. Außerdem ist der Boden damit nur geringfügig besser gegen Feuchtigkeit geschützt.

Aus den Druckschriften US 5,295,341 sowie WO 96/27721 ist bekannt, die seitlichen Kanten eines Paneels aus wasserdichten Materialien zu fertigen. Die Herstellung ist jedoch relativ teuer. Daher konnten sich diese Lösungen am Markt nicht behaupten. Aus den Druckschriften EP 0 843 763 B1, **DE 201 09 840 U1 sowie EP 0 855 482 A2** ist bekannt, die Oberflächen der Kupplungselemente so zu behandeln oder zu beschichten, dass diese gegen das Eindringen von Feuchtigkeit in ein Paneel geschützt sind. **Die EP 0 855 482 A2 lehrt, eine Dichtungsmasse in einer Verbindungsfuge zwischen zwei Paneelen einzusetzen. Gemäß der DE 201 09 840 U1 wird eine feuchtigkeitsabweisende Paste oder klebrige Masse, die an die Oberfläche der Platten grenzt, zwischen Platten eines Fußbodenbelags gebracht.** Herstellungstechnisch ist dies jedoch schwierig zu bewerkstelligen, da auf einen exakten Randabschluss zur Oberfläche hin zu achten ist. Reicht die Versiegelungsschicht nicht bis zur Oberfläche, so ist der Schutz unzureichend. Wird bei der Fertigung darauf geachtet, dass eine seitliche Kante bis zur Oberfläche hin beschichtet wird, so ist die Gefahr groß, dass die Beschichtung an der Oberfläche sichtbare Spuren hinterlässt. Die Optik wird entsprechend beeinträchtigt. Hierdurch würde das Produkt unverkäuflich. Beim Verlegen kann die Beschichtung darüber hinaus leicht beschädigt werden, da diese mechanisch stark belastet wird. Der Schutz gegen Feuchtigkeit ist dann im entsprechenden Umfang nicht mehr gewährleistet.

Stand der Technik ist darüber hinaus eine sogenannte Kantenversiegelung mit Ölen oder heißen Wachsen. Diese Verfahren führen jedoch nachweislich zu Böden mit unzureichendem Schutz gegenüber Feuchtigkeit und Nässe.

Der Erfindung liegt die Aufgabe zugrunde, ein preiswertes, einfach anzuwendendes Feuchtigkeitsschutzmittel für den Schutz von Paneelen anzugeben, die leimlos miteinander verbunden werden können.

Die Aufgabe wird durch eine Verwendung eines Feuchtigkeitsschutzmittels mit den Merkmalen des ersten Anspruchs gelöst. Vorteilhafte Ausgestaltungen ergeben sich aus den Unteransprüchen.

Betroffen sind Paneele, die in eingangs genannter Weise formschlüssig miteinander verriegelt werden können. Diese sind dann einerseits senkrecht zur Oberfläche verriegelt. Ferner sind sie senkrecht zur Verbindungsfuge sowie zugleich parallel zur Oberfläche durch Formschluss verriegelt.

Bei dem erfindungsgemäßen Feuchtigkeitsschutzmittel handelt es sich um eine Paste, die vorzugsweise in Form einer geschlossenen Raupe an den seitlichen Kanten eine Paneels aufgetragen wird. Vorteilhaft wird das Feuchtigkeitsschutzmittel auf der Oberseite einer Feder eines Paneels aufgetragen, um so die Menge an benötigtem Feuchtigkeitsschutzmittel zu minimieren. Die Menge und die Art der Auftragung ist stets so zu wählen, dass beim Zusammenfügen von zwei Paneelen ein Teil des Feuchtigkeitsschutzmittels nach oben aus der Verbindungsfuge hervorquillt. Die Menge des aufgetragenen Feuchtigkeitsschutzmittels beträgt daher in der Regel wenigstens 6 Gramm pro laufendem Meter, bevorzugt wenigstens 12 Gramm pro laufendem Meter. Um nicht Feuchtigkeitsschutzmittel zu verschwenden, wird die aufgetragene Menge bevorzugt auf 20 Gramm pro laufendem Meter beschränkt.

Die Paneele werden nach dem Auftragen des Feuchtigkeitsschutzmittels zusammengefügt. Das Feuchtigkeitsschutzmittel tritt dann gleichmäßig aus den Verbindungsfugen nach oben heraus. Nachdem das herausgetretene Feuchtigkeitsschutzmittel getrocknet ist, wird der herausgetretene Anteil abgezogen. Dies kann problemlos mit der Hand geschehen.

Das Abziehen bzw. Entfernen des herausgetretenen Feuchtigkeitsschutzmittels wird in einer Ausführungsform mit einem Kunststoffspachtel unterstützt. Der Spachtel ist weich genug, um die Oberfläche nicht zu beschädigen.

In einer Ausführungsform der Erfindung wird der herausgetretene Anteil des Feuchtigkeitsschutzmittels wenigstens 10 Minuten, bevorzugt wenigstens 30 Minuten, insbesondere wenigstens 60 Minuten bei Raumtemperatur getrocknet, ehe der herausgetretene Anteil entfernt bzw. abgezogen wird. Die Raumtemperatur kann 21 °C betragen.

Wird das Feuchtigkeitsschutzmittel in vorgenannter Weise angewendet, so sind zwei Paneele bis zur Oberkante einer Verbindungsfuge sehr gut gegen Feuchtigkeit geschützt. Da das Feuchtigkeitsschutzmittel von der Oberfläche rückstandslos entfernt werden kann, ist die Optik einwandfrei. Besonders einfach gelingt das Entfernen, wenn der herausgetretene Teil hinreichend getrocknet ist. Dann lässt sich nämlich der gesamte herausgetretene Teil des Feuchtigkeitsschutzmittels in Form eines Fadens von der Oberfläche vollständig ablösen. Das Ablösen gelingt dann also besonders schnell.

Der Feuchtigkeitsschutz ist sehr gut und insbesondere wesentlich besser im Vergleich zu den eingesetzten Ölen und Wachsen, die beim Stand der Technik verwendet werden. Auch lassen sich Rückstände einfacher und schneller von der Oberfläche entfernen, wenn das Feuchtigkeitsschutzmittel soweit getrocknet ist, dass es in Form eines Fadens entfernt werden kann. Auch können die Paneele auseinander genommen und wiederverwendet werden, da das Feuchtigkeitsschutzmittel zwei Paneele nicht fest miteinander verleimt.

Ein erfindungsgemäß verwendetes Paneel weist in einer Ausführungsform wenigstens eine seitlich eingefräste Nut auf, die durch zwei Flanken oder Schenkel gebildet wird. Die eine Flanke ragt bevorzugt über die andere hinaus, ist also länger als die andere. Beide Flanken sind insbesondere starr, also im wesentlichen nicht elastisch. Eine Flanke ist starr im Sinne der Erfindung, wenn diese im Unterschied zur Lehre gemäß Druckschrift WO 97/47834 nicht so gebogen werden kann, dass ein Zusammenfügen durch Zusammenschieben zweier Paneele in einer Ebene möglich ist. In der längeren Flanke ist wenigstens eine Ausnehmung vorgesehen.

Ein zweites Paneel weist seitlich eine Feder auf, die in die vorgenannte Nut eingeführt wird, um zwei Paneele miteinander zu verbinden. Die Feder weist wenigstens eine vorstehende Nase an ihrer Unter- oder Oberseite auf, die in die vorgenannte Ausnehmung der Flanke gelangt, wenn die zwei Paneele zusammengefügt werden. Die Nase reicht dann bis zum Boden der Ausnehmung.

Die Feder ist an einer Seite (Unter- oder Oberseite) an ihrem offenen Ende bevorzugt abgeschrägt, so dass die Feder in diesem Bereich ähnlich wie bei einer Spitze zuläuft. Bei der Seite handelt es sich um die Seite, die an die Flanke mit der Ausnehmung grenzt. Durch diese Schräge bzw. durch den dadurch bereitgestellten Freiraum wird es möglich, durch eine Drehbewegung um die Verbindungsfuge zweier Paneele herum ein Paneel von einem weiteren Paneel zu lösen bzw. umgekehrt zwei Paneele durch die Drehbewegung miteinander zu verbinden. Die Feder wird also durch eine Drehbewegung in die korrespondierende Nut eines benachbarten Paneels hineinbewegt, ohne dass die Flanke mit der Ausnehmung stark gebogen werden müsste. Eine solche Drehbewegung ist aus der Druckschrift EP 0855482 B1 bekannt.

Durch die erfindungsgemäße Geometrie ist es möglich, die Flanken der seitlichen Nut in einem Paneel starr auszugestalten. Die formschlüssige Verbindung zwischen zwei Paneelen ist dann besonders stabil. Außerdem werden Hebelkräfte eingesetzt, wodurch es besonders einfach gelingt, aufgetragenes Feuchtigkeitsschutzmittels gleichmäßig so unter Druck zu setzen, dass es nach oben gleichmäßig hervorquillt. Das gleichmäßige Hervorquellen ist von Vorteil, da insbesondere dann der herausgetretene, hinreichend getrocknete Anteil an Feuchtigkeitsschutzmittel in Form eines Fadens abgezogen werden kann.

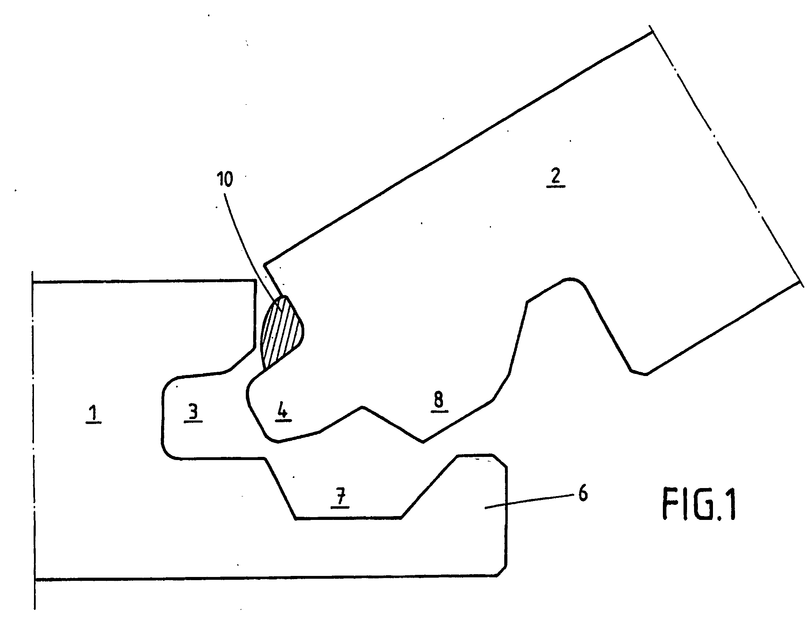

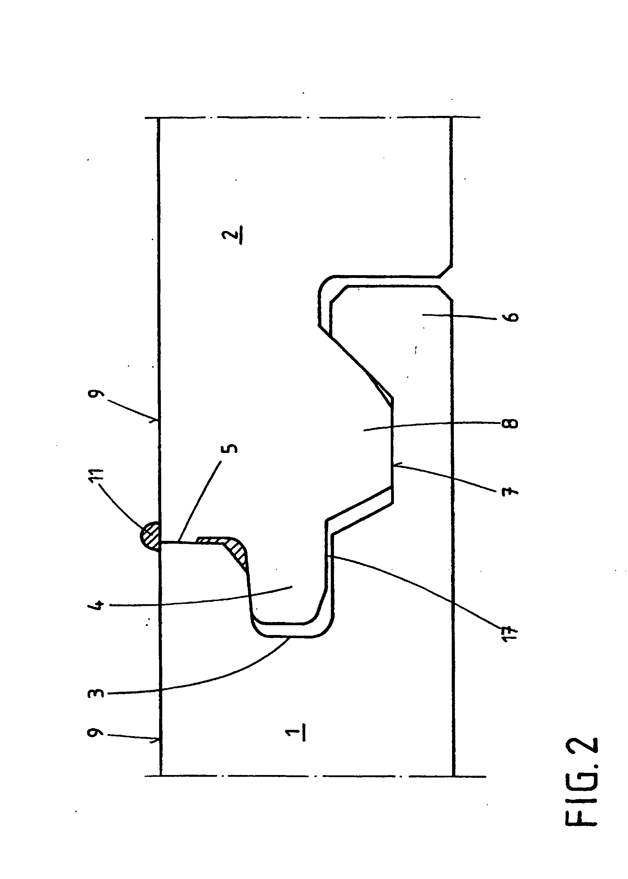

Fig. 1 zeigt einen Schnitt durch zwei Paneele 1 und 2, die formschlüssig miteinander verbunden werden können. Paneel 1 weist an einer Längsseite eine Nut 3 auf. An einer Längsseite des Paneels 2 ist eine Feder 4 vorgesehen. Die Feder 4 wird in die Nut 3 hineingedreht und befindet sich in der Nut 3, wenn die beiden Paneele 1 und 2 miteinander verbunden sind. Figur 2 zeigt den Zustand, wenn die beiden Paneele miteinander verbunden sind. Die Verbindungsfuge 5 diente bei der Drehung als Drehachse. Bei der Verbindungsfuge 5 handelt es sich um die Fuge, die sich zwischen den beiden Paneelen 1 und 2 befindet. Die Längsseite mit der Nut 3 weist eine vorstehende untere Flanke 6 auf. Diese untere Flanke 6 ist an der langen Seite starr im Sinne der Erfindung, da es nicht möglich ist, diese hinreichend elastisch nach unten zu drücken, um so die Feder von Paneel 2 in die Nut 3 durch eine Bewegung in einer Ebene hineinschieben zu können. In die untere Flanke 6 ist als Ausnehmung eine Rille bzw. Ausnehmung 7 im wesentlichen senkrecht von oben eingefräst worden. Die Rille bzw. Ausnehmung 7 erstreckt sich über die gesamte Längsseite des Paneels 1. Paneel 2 weist unterhalb der Feder 4 ein nach unten vorstehendes Verriegelungselement 8 auf. In der Fig. 2 wird gezeigt, wie das vorstehende Verriegelungselement 8 in die Rille 7 hineinragt, wenn die Paneele in erfindungsgemäßer Weise miteinander verbunden sind. Die Position des vorstehenden Verriegelungselements 9 ist so auf die Rille 7 abgestimmt, dass das Paneel 1 mit dem Paneel 2 auf der Oberseite 9 der Paneele dicht abschließt. Es verbleibt also kein Spalt an der Oberfläche 9 bei der Verbindungsfuge 5.

Das erfindungsgemäße Feuchtigkeitsschutzmittel wird auf der Oberseite der Feder 4 entlang der Feder, also senkrecht zur Papierebene, gleichmäßig aufgetragen. Die Menge an aufgetragenem Feuchtigkeitsschutzmittel ist so bemessen, dass durch das Zusammenfügen ein überschüssiger Anteil 11 des Feuchtigkeitsschutzmittels aus der Verbindungsfuge 5 nach oben herausquillt. Nachdem dieser Anteil 11 hinreichend getrocknet ist, kann ein Ende mit der Hand von der Oberfläche des Paneels gelöst und ergriffen werden. Wird an diesem Ende geeignet gezogen, so löst sich der gesamte herausgetretene Anteil 11 nach und nach vom Paneel rückstandsfrei ab. Schließlich verbleibt ein vom Paneel abgelöster Anteil 11, der in Form eines Fadens vorliegt.

Da das Feuchtigkeitsschutzmittel aus der Fuge herausgetreten ist, ist damit zugleich sichergestellt, dass die Paneele 1 und 2 innerhalb der Verbindungsfuge - bis an die Oberfläche 9 heranreichend - vollständig gegen eindringende Feuchtigkeit geschützt sind. Diese Art von Feuchtigkeitsschutz ist deutlich besser als der, der durch Wachs oder Öl erreicht wurde. Er ist erheblich preiswerter und in der Regel auch weniger störanfällig im Vergleich zu einer wasserdichten Beschichtung der seitlichen Kanten. Er kann erneut angewendet werden, wenn Paneele auseinander genommen und anschließend neu verlegt werden. Dabei kann der Schutz gegen Feuchtigkeit nicht beschädigt werden, wie dies der Fall sein kann, wenn seitlich wasserdicht beschichtet wurde. Durch die Drehbewegung wird erreicht, dass eine Art Hebelkraft wirksam wird, wenn die Paneele miteinander verbunden werden. Ohne großen Kraftaufwand gelingt es daher, überschüssige Menge an Feuchtigkeitsschutzmittel aus der Fuge herauszudrücken.

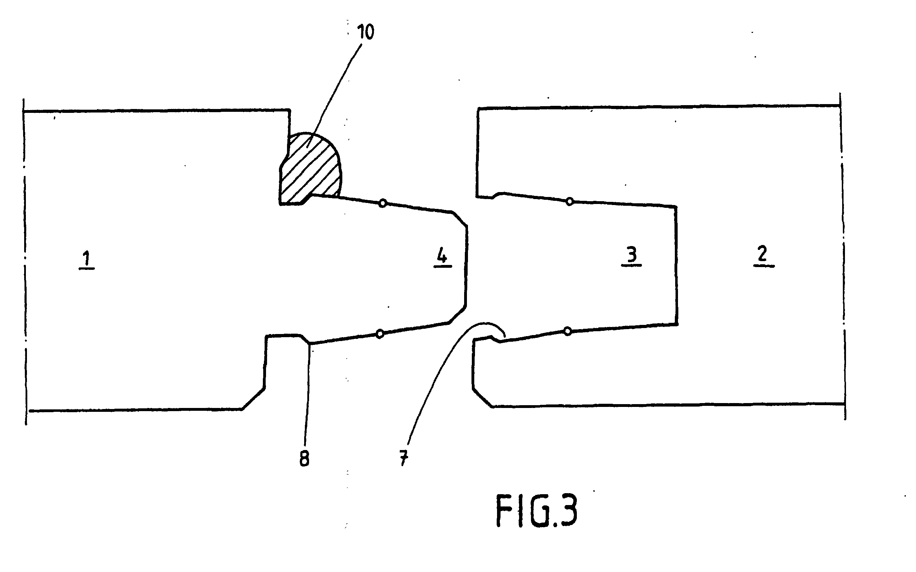

Figur 3 zeigt Verbindungsprofile von Paneelen 1 und 2, die vorzugsweise an den schmalen Seiten der Paneele 1 und 2 vorgesehen sind, um so Paneele zunächst an den Längsseiten durch Verdrehen und anschließend an den Schmalseiten durch Verschieben besonders einfach verlegen zu können. Es entfällt dann jedoch an den Schmalseiten die vorteilhafte Hebelkraft. Das vorstehende Verriegelungselement 8 an der Unterseite der Feder 4 aus Figur 3 steht im Vergleich zum vorstehenden Verriegelungselement 8, welches in den Figuren 1 und 2 gezeigt wird, nur wenig hervor. Entsprechend gering ist die Tiefe der Rille 7, die in Figur 2 gezeigt wird, im Vergleich zu der Tiefe d er Rille, die in den Figuren 1 und 2 gezeigt wird. Obwohl das Holz oder der Holzwerkstoff nur wenig elastisch ist, gelingt das Verbinden durch Verschieben in einer Ebene, da die Dimensionen der Kupplungselemente 7 und 8 - wie beschrieben - vergleichsweise klein sind. Wiederum wird oberhalb der Feder 4 das Feuchtigkeitsschutzmittel aufgetragen, um so mit geringen Mengen an Feuchtigkeitsschutzmittel auskommen zu können.

Die als Feuchtigkeitsschutzmittel verwendete Dichtungsmasse wird durch Einfügen einer trocknenden und/oder vulkanisierbaren Zusammensetzung gebildet. Die resultierende elastische Dichtungsmasse sollte einerseits so beschaffen sein, dass sie die Fugen zwischen den Platten wirksam versiegelt, andererseits sollte sich aus der Fugen austretende Dichtungsmasse leicht und ohne Beschädigung der Paneele entfernen lassen. Letzteres kann dadurch erreicht werden, dass die Klebrigkeit der Dichtmasse verringert wird.

Die trocknenden bzw. vulkanisierbaren Zusammensetzungen, aus denen die elastischen Dichtmassen erhalten werden, enthalten zweckmäßig mindestens ein natürliches und/oder synthetisches Harz, mindestens einen Füllstoff sowie mindestens ein organisches Lösungsmittel.

Als natürliche und/oder synthetische Harze sind insbesondere Polychloroprene sowie Phenol/Formaldehyd-Harze, insbesondere Novolake geeignet.

Bei den verwendeten Polychloroprenen handelt es sich um Polymere des Chloroprens, die technisch durch Emulsionspolymerisation hergestellt werden.

Bei den Phenol/Formaldehyd-Harzen oder Phenolharzen handelt es sich um Polykondensationsharze, die aus Formaldehyd und aromatischen Phenolen hergestellt werden. Besonders bevorzugt handelt es sich erfindungsgemäß um Novolake mit einer zahlenmittleren Molekülmasse von 500 bis 1000.

Die härtbare bzw. vulkanisierbare Zusammensetzung, aus der die Dichtungsmassen erhalten werden, enthalten zweckmäßig von etwa 5,5 bis 55 Gew.-% der natürlichen und/oder synthetischen Harze.

Weiterhin enthalten die erfindungsgemäß aus den härtenden bzw. vulkanisierbaren Zusammensetzung erhaltenen Dichtungsmassen mindestens einen Füllstoff, insbesondere mindestens einen anorganischen Füllstoff. Dabei hat sich die Verwendung von Kieselsäure als besonders vorteilhaft erwiesen.

Geeignete Kieselsäuren sind z.B. sogenannte pyrogene Kieselsäuren. Daneben können als Füllstoffe Kaolin und Calciumcarbonate eingesetzt werden.

Die erfindungsgemäß verwendete Zusammensetzung, aus der die Dichtungsmassen erhalten werden, weisen weiterhin bevorzugt mindestens ein organisches Lösungsmittel auf. Dabei handelt es sich zweckmäßig um mindestens einen aliphatischen oder aromatischen Kohlenwasserstoff, wie z.B. Kohlenwasserstoffe wie n-Pentan, n-Hexan, n-Heptan, aliphatische Ketone, wie Methyl-Ethyl-Keton, Aceton sowie aliphatische Ester wie beispielsweise Methyloder Ethylacetat. Eine bevorzugte Lösungsmittelzusammensetzung ist ein Gemisch aus 10 bis 50 Gew.-% aliphatischen Kohlenwasserstoffen, insbesondere n-Hexan, 10 bis 70 % aliphatischen Ketonen, insbesondere 5 bis 40 Gew.-% Methyl-Ethyl-Keton sowie 5 bis 30 Gew.-% Aceton und 5 bis 20 Gew.-% aliphatischen Estern, wie insbesondere Ethylacetat.

Daneben können z. B. Lösungsmittel wie Cyclohexane eingesetzt werden.

Die erfindungsgemäße Zusammensetzung, aus der die Dichtungsmassen resultieren, enthalten in einer Ausführungsform übliche für Dichtungsmassen angewendete Hilfsstoffe wie zum Beispiel Alterungsschutzmittel so zum Beispiel Lichtschutzmittel.

Um den Anforderungen an eine reduzierte Klebrigkeit sowie einer guten Entfernbarkeit von überschüssiger aus der Fuge heraustretende Dichtungsmasse zu genügen, weist die erfindungsgemäß verwendete härtbare bzw. vulkanisierbare Zusammensetzung mindestens einen synthetischen oder natürlichen Kautschuk und mindestens ein Phenolharz in einem Mengenverhältnis von etwa 10:1 bis etwa 1:1 auf. Bei diesen Mengenverhältnissen lässt sich überschüssige Dichtmasse, die aus der Fuge dringt, besonders gut von den Laminatböden entfernen.

Eine besonders bevorzugte Zusammensetzung, aus der die erfindungsgemäß verwendeten Dichtmassen durch Trocknung, Härtung bzw. Vulkanisierung hervorgehen, besitzt folgende Zusammensetzung:
5 bis 25 Gew.-% mindestens eines Polychloroprens,
0,5 bis 20 Gew.-% mindestens eines Phenolformaldehyd-Harzes,
0,1 bis 5 Gew.-% mindestens eines anorganischen Füllstoffes, bevorzugt mindestens einer Kieselsäure,
0,1 bis 1 Gew.-% mindestens eines Alterungsschutzmittels.
60 bis 90 Gew.-% mindestens eines anorganischen Lösungsmittels.

Die Fugendichtungsmasse wird hergestellt durch Einfügen der oben beschriebenen Zusammensetzung und anschließende Trocknung. Diese erfolgt in der Regel bei Raumtemperatur (ca. 20 bis 30°C). Es können jedoch auch niedrigere (bis zu 5°C) oder höhere Temperaturen (bis zu 50°C) angewendet werden.

In einem bevorzugten Ausführungsbeispiel wird eine Masse gefertigt aus:
- 17 Teilen Polychloropren,
- 5 Teilen eines Novolakes mit einer mittleren Molmasse 900,
- 2 Teilen Kieselsäure (Thixotropierungsmittel),
- 0,5 Teilen Hydrochinonmonobenzylether (Alterungsschutzmittel),
- 0,1 Teilen Magnesiumoxid (Vulkanisationsmittel) und
- 75,4 Teilen eines Lösungsmittelgemisches bestehend aus 40 % n-Hexan, 25 % Methyl-ethyl-keton, 20 % Aceton und 15 % Ethylacetat.

Ferner wird ein Laminatboden mit einem mechanischen Verriegelungssystem zur Verfügung gestellt. An den Längsseiten sind die in den Figuren 1 und 2 gezeigten Verriegelungs- bzw. Kupplungselemente vorgesehen. An den Schmalseiten sind die in der Figur 3 gezeigten Verriegelungselemente vorgesehen. Dabei ist jedoch zu bevorzugen, dass die Kupplungselemente 7 und 8 lediglich unterhalb der Feder 4 vorgesehen sind, um optische Beeinträchtigungen der mit einem Dekor versehenen Oberfläche des Panels zuverlässig zu vermeiden.

Die rezepturgemäße Masse wird in Form einer geschlossenen Raupe auf die Federseiten der Paneele aufgetragen. Die Auftragsmenge beträgt dabei 12 g/lfm. Die Paneele werden danach sofort gemäß der jeweiligen Verlegeanleitung zusammengefügt. Dabei ist vorteilhaft darauf zu achten, dass die Masse gleichmäßig aus den gesamten Fugenbereichen nach oben heraustritt. Nach 60 Minuten Abtrocknen bei einer Raumtemperatur von 21 °C wird die herausgetretene Masse mit der Hand einfach abgezogen. Das Abziehen kann mit einem Kunststoffspachtel unterstützt werden.

Die Kraft (Auszugskraft), die aufgewendet werden muss, um Stirnseiten bzw. Schmalseiten zweier miteinander verbundener Paneele mit einem Profil gemäß Figur 3 auseinanderzuziehen, beträgt 686 N. Die Auszugskraft beträgt 578 N, wenn die Paneele an den Stirnseiten ausschließlich mechanisch verriegelt sind.

Folgende Prüfmethode zur Bestimmung der Auszugskraft wurde angewendet:

Als Messvorrichtung wurde eine Kraftmessdose "dynafor B 00004" mit einer Einspannvorrichtung eingesetzt. Die Einspannvorrichtung ist an einer Gewindespindel befestigt.

Zwei Paneele mit einer Profilierung gemäß Figur 3 wurden stirnseitig zusammengefügt. Die Dimension eines Paneels betrug an der 193 mm (Breite) x 150 mm (Länge) x 7 mm (Dicke).

Der Prüfkörper wird auf einer Paneelstirnseite fest fixiert. Auf der anderen Seite wird die Kraftmessdose mittels der integrierten Spannvorrichtung befestigt. Mittels Gewindespindel wird an den Prüfkörper eine Kraft angelegt. Ermittelt wird die maximale Kraft, bei der die Entriegelung der zwei Paneele erfolgt.

Der nachfolgenden Tabelle sind Ergebnisse zu entnehmen, die anhand von Vergleichsbeispielen die Klebeigenschaften der erfindungsgemäßen Dichtmasse verdeutlichen.

| mechanische Verriegelung | Auszugskraft (N) |
|---|---|
| ohne Klebemittel: | 578 |
| mit Dichtmasse gemäß dem Beispiel: | 686 |
| mit Pattex® Compact der Fa. Henkel: | 1000 |
| mit ICEMA L 8/45 T1 der Fa. Fuller | 1568 |
| mit PVAc Leim (D3-Leim) | > 3500 |

Die Auszugskraft, die bei dem D3-Leim aufzuwenden ist, konnte nicht ermittelt werden, da hier die Verriegelungselemente zerstört wurden. An den Vergleichsversuchen wird deutlich, dass die Kraft, die für eine Entriegelung aufgewendet werden muss, sich durch die erfindungsgemäße Dichtungsmasse im Vergleich zu einem Klebstoff nicht wesentlich verändert. Die Auszugskraft wird um weniger als 30% durch die Dichtungs- bzw. Dichtmasse gesteigert. So ist sichergestellt, dass die Paneele problemlos wieder gelöst und wiederverwendet werden können.

## Patentansprüche

1. Verwendung einer Dichtungsmasse (10) als Feuchtigkeitsschutzmittel bei Paneelen (1, 2), die formschlüssig miteinander verriegelt werden können, in dem die Dichtungsmasse (10) seitlich auf wenigstens ein Paneel (1) aufgetragen und anschließend dieses Paneel (1) mit einem weiteren Paneel (2) verbunden wird,
**dadurch gekennzeichnet, dass**
- die aufgetragene Menge an Feuchtigkeitsschutzmittel so gewählt wird, dass beim Zusammenfügen von zwei Paneelen (1, 2) ein Teil (11) des Feuchtigkeitsschutzmittels nach oben aus der Verbindungsfuge (5) der beiden Paneele (1, 2) hervorquillt,
- bei dem der aus der Verbindungsfuge (5) herausgetretene Anteil (11) an Feuchtigkeitsschutzmittel getrocknet und anschließend entfernt wird.

2. Verwendung nach Anspruch 1, bei dem das Feuchtigkeitsschutzmittel in Form einer geschlossenen Raupe seitlich auf ein Paneel (1) aufgetragen wird.

3. Verwendung nach Anspruch 1 oder 2, bei dem das Feuchtigkeitsschutzmittel (10) auf der Oberseite einer Feder (4) eines Paneels (1) aufgetragen wird.

4. Verwendung nach einem der vorhergehenden Ansprüche, bei dem die aufgetragene Menge an Feuchtigkeitsschutzmittel wenigstens 6 Gramm pro laufendem Meter, bevorzugt wenigstens 12 Gramm pro laufendem Meter beträgt und / bei dem die aufgetragene Menge an Feuchtigkeitsschutzmittel 30 Gramm pro laufendem Meter nicht überschreitet.

5. Verwendung nach einem der vorhergehenden Ansprüche, bei dem die Paneele (1, 2) nach dem Auftragen des Feuchtigkeitsschutzmittels (10) innerhalb von 5 Minuten, bevorzugt innerhalb von 2 Minuten zusammengefügt werden.

6. Verwendung nach einem der vorhergehenden Ansprüche, bei dem der herausgetretene Anteil (11) an Feuchtigkeitsschutzmittel wenigstens 10 Minuten lang getrocknet wird.

7. Verwendung nach einem der vorhergehenden Ansprüche, bei dem der aus der zwischen zwei Paneelen (1, 2) befindlichen Verbindungsfuge (5) herausgetretene Anteil (11) an Feuchtigkeitsschutzmittel (10) mittels eines Kunststoffspachtels ganz oder teilweise entfernt wird.

8. Verwendung nach einem der vorhergehenden Ansprüche, **dadurch gekennzeichnet, dass** die Dichtungsmasse im ausgehärteten Zustand die Auszugskraft um nicht mehr als 30% erhöht.

9. Verwendung nach einem der vorhergehenden Ansprüche, **dadurch gekennzeichnet, dass** die Dichtungsmasse durch Trocknung und/oder Vulkanisierung einer Zusammensetzung erhalten wird, die mindestens einen synthetischen oder natürlichen Kautschuk, mindestens ein natürliches und/oder synthetisches Harz, mindestens ein organisches Lösungsmittel sowie mindestens einen Füllstoff enthält.

10. Verwendung nach einem der vorhergehenden Ansprüche, **dadurch gekennzeichnet, dass** die Dichtungsmasse ein Harz aufweist und das Harz aus Polychloropren und/oder Phenol/Formaldehyd-Harzen ausgewählt wird.

11. Verwendung nach einem der vorhergehenden Ansprüche, **dadurch gekennzeichnet, dass** der Füllstoff aus anorganischen Rohstoffen, bevorzugt aus Kieselsäuren ausgewählt wird.

12. Verwendung nach einem der vorhergehenden Ansprüche, **dadurch gekennzeichnet, dass** die Lösungsmittel ausgewählt werden aus aliphatischen oder aromatischen Kohlenwasserstoffen, Ketonen und Estern.

13. Verwendung nach einem der vorhergehenden Ansprüche, **dadurch gekennzeichnet, dass** die Zusammensetzung ein Vulkanisationsmittel aufweist.

14. Verwendung nach einem der vorhergehenden Ansprüche, **dadurch gekennzeichnet, dass** die Zusammensetzung weitere für Dichtmassen übliche Zusatzstoffe enthält, wie z.B. Alterungsschutzmittel.

15. Verwendung nach einem der vorhergehenden Ansprüche, **dadurch gekennzeichnet, dass** die Zusammensetzung Polychloropren und ein Phenolharz aufweist.

16. Verwendung nach einem der vorhergehenden Ansprüche, **dadurch gekennzeichnet, dass** das Gewichtsverhältnis des Polychloroprens zu dem Phenolharz von 10:1 bis 1:1 beträgt.

17. Verwendung nach einem der vorhergehenden Ansprüche, **dadurch gekennzeichnet, dass** die Zusammensetzung aufweist:
5 bis 25 Gew.-% Polychloropren,
0,5 bis 20 Gew.-% eines Phenolharzes,
0,1 bis 1 Gew.-% mindestens eines Alterungsschutzmittels,
60 bis 90 Gew.-% mindestens eines organischen Lösungsmittels,
0,1 bis 5 Gew.-% eines anorganischen Füllstoffs.

## Claims

1. Use of a sealing compound (10) as a moisture protection agent for panels (1,2), which can be locked to one another in a form-fit manner, in that the sealing compound (10) is applied to the side of at least one panel (1) and that this panel (1) is then connected to another panel (2),
**characterised in that**
- the quantity of moisture protection agent applied is selected in such a manner that, when joining together two panels (1, 2) a portion (11) of the moisture protection agent swells upwards out of the connecting joint (5) between the two panels (1,2),
- wherein the portion (11) of moisture protection agent protruding from the connecting joint (5) is dried and then removed.

2. Use according to claim 1, wherein the moisture protection agent is applied to the side of one panel (1) in the form of an enclosed bead.

3. Use according to claim 1 or 2, wherein the moisture protection agent (10) is applied to the upper side of a tongue (4) of a panel (1).

4. Use according to any one of the preceding claims, wherein the quantity of moisture protection agent applied is at least 6 grams per running metre, preferably at least 12 grams per running metre, and wherein the quantity of moisture protection agent applied does not exceed 30 grams per running metre.

5. Use according to any one of the preceding claims, wherein the panels (1,2) are connected to one another within 5 minutes, preferably within 2 minutes, after the application of the moisture protection agent (10).

6. Use according to any one of the preceding claims, wherein the protruding portion (11) of moisture protection agent is dried for at least 10 minutes.

7. Use according to any one of the preceding claims, wherein the portion (11) of moisture protection agent (10) protruding from the connecting joint (5) between two panels (1,2) is removed completely or partially by means of a synthetic-material spatula.

8. Use according to any one of the preceding claims, **characterised in that,** in the hardened condition, the sealing compound increases the separating force by no more than 30%.

9. Use according to any one of the preceding claims, **characterised in that** the sealing compound is obtained by drying and/or vulcanisation of a composition, which contains at least one synthetic or natural rubber, at least one natural and/or synthetic resin, at least one organic solvent and at least one filler.

10. Use according to any one of the preceding claims, **characterised in that** the sealing compound comprises a resin, and the resin is selected from polychloroprene and/or phenol/formaldehyde resins.

11. Use according to any one of the preceding claims, **characterised in that** the filler is selected from an inorganic raw material, preferably from the silicic acids.

12. Use according to any one of the preceding claims, **characterised in that** the solvents are selected from the aliphatic or aromatic hydrocarbons, ketones and esters.

13. Use according to any one of the preceding claims, **characterised in that** the composition comprises a vulcanising agent.

14. Use according to any one of the preceding claims, **characterised in that** the composition contains other additives conventionally used in sealing compounds, for example, age-resisters.

15. Use according to any one of the preceding claims, **characterised in that** the composition comprises polychloroprene and a phenol resin.

16. Use according to any one of the preceding claims, **characterised in that** a weight ratio of the polychloroprene to the phenol resin is from 10:1 to 1:1.

17. Use according to any one of the preceding claims, **characterised in that** the composition comprises
5 to 25% by weight polychloroprene,
0.5 to 20% by weight of a phenol resin,
0.1 to 1% by weight of at least one age-resister,
60 to 90% by weight of at least one organic solvent,
0.1 to 5% by weight of an inorganic filler.

## Revendications

1. Utilisation d'un mélange d'étanchéité (10) servant de produit de protection contre l'humidité concernant des panneaux de boiserie (1, 2) qui peuvent être verrouillés ensemble, par sûreté de forme, utilisation dans laquelle le mélange d'étanchéité (10) est appliqué latéralement sur au moins un panneau de boiserie (1), et ce panneau de boiserie (1) est assemblé, ensuite, à un autre panneau de boiserie (2),
**caractérisée**
- **en ce que** la quantité appliquée de produit de protection contre l'humidité est choisie de manière telle, que lors de l'assemblage de deux panneaux de boiserie (1, 2), une partie (11) du produit de protection contre l'humidité ressorte, par le haut, du joint d'assemblage (5) des deux panneaux de boiserie (1, 2),
- **en ce que**, dans cette utilisation, la partie (11) du produit de protection contre l'humidité, sortant du joint d'assemblage (5), est séchée puis éliminée.

2. Utilisation selon la revendication 1, dans laquelle le produit de protection contre l'humidité est appliqué sur un panneau de boiserie (1), latéralement, sous la forme d'un bourrelet fermé.

3. Utilisation selon la revendication 1 ou 2, dans laquelle le produit de protection contre l'humidité (10) est appliqué sur la partie supérieure d'une languette (4) d'un panneau de boiserie (1).

4. Utilisation selon l'une quelconque des revendications précédentes, dans laquelle la quantité appliquée de produit de protection contre l'humidité est au moins de 6 grammes par mètre courant, de préférence au moins de 12 grammes par mètre courant, et utilisation dans laquelle la quantité appliquée de produit de protection contre l'humidité ne dépasse pas 30 grammes par mètre courant.

5. Utilisation selon l'une quelconque des revendications précédentes, dans laquelle les panneaux de boiserie (1, 2) sont, après l'application du produit de protection contre l'humidité (10), assemblés suivant un laps de temps de 5 minutes, de préférence suivant un laps de temps de 2 minutes.

6. Utilisation selon l'une quelconque des revendications précédentes, dans laquelle la partie (11), qui ressort du produit de protection contre l'humidité, est séchée au moins en 10 minutes.

7. Utilisation selon l'une quelconque des revendications précédentes, dans laquelle la partie (11) du produit de protection contre l'humidité (10), qui ressort du joint d'assemblage (5) placé entre deux panneaux de boiserie (1, 2), est enlevée complètement ou partiellement au moyen d'une spatule en matière plastique.

8. Utilisation selon l'une quelconque des revendications précédentes, **caractérisée en ce que** le mélange d'étanchéité, à l'état durci, n'augmente pas la force d'arrachement de plus de 30 %.

9. Utilisation selon l'une quelconque des revendications précédentes, **caractérisée en ce que** le mélange d'étanchéité est obtenu par séchage et/ou par vulcanisation d'une composition qui contient au moins un caoutchouc synthétique ou naturel, au moins une résine naturelle et/ou synthétique, au moins un solvant organique ainsi que, au moins, une charge.

10. Utilisation selon l'une quelconque des revendications précédentes, **caractérisée en ce que** le mélange d'étanchéité présente une résine, et la résine est sélectionnée parmi des résines à base de polychloroprène et/ou de résines à base de phénol / de formaldéhyde.

11. Utilisation selon l'une quelconque des revendications précédentes, **caractérisée en ce que** la charge est sélectionnée parmi des produits bruts inorganiques, de préférence parmi des acides siliques.

12. Utilisation selon l'une quelconque des revendications précédentes, **caractérisée en ce que** les solvants sont sélectionnés parmi des hydrocarbures aliphatiques ou aromatiques, des cétones et des esters.

13. Utilisation selon l'une quelconque des revendications précédentes, **caractérisée en ce que** la composition présente un moyen de vulcanisation.

14. Utilisation selon l'une quelconque des revendications précédentes, **caractérisée en ce que** la composition contient d'autres additifs habituels pour des mélanges d'étanchéité, comme par exemple des produits de protection contre le vieillissement.

15. Utilisation selon l'une quelconque des revendications précédentes, **caractérisée en ce que** la composition présente du polychloroprène et une résine phénolique.

16. Utilisation selon l'une quelconque des revendications précédentes, **caractérisée en ce que** le rapport de poids existant entre le polychloroprène et la résine phénolique est compris entre 10 : 1 et 1 : 1.

17. Utilisation selon l'une quelconque des revendications précédentes, **caractérisée en ce que** la composition présente :
- entre 5 % en poids et 25 % en poids de polychloroprène,
- entre 0,5 % en poids et 20 % en poids d'une résine phénolique,
- entre 0,1 % en poids et 1 % en poids d'au moins un produit de protection contre le vieillissement,
- entre 60 % en poids et 90 % en poids d'au moins un solvant organique,
- entre 0,1 % en poids et 5 % en poids d'une charge minérale.
